# EUROPÄISCHE PATENTSCHRIFT

(11) **EP 0 925 208 B1**
(45) Veröffentlichungstag und Bekanntmachung des Hinweises auf die Patenterteilung: **05.04.2000**
(21) Anmeldenummer: 97944880.0
(22) Anmeldetag: 15.09.1997
(51) Int. Cl.: B60R 21/20

(54) **AIRBAG-ABDECKUNG AUS KUNSTSTOFF**
AIRBAG PLASTIC COATING
RECOUVREMENT PLASTIQUE D'AIRBAG

(30) Priorität: 13.09.1996 DE 19637321
(43) Veröffentlichungstag der Anmeldung: 30.06.1999
(73) Patentinhaber: Rychter, Josef, 96191 Trunstadt (DE)
(72) Erfinder: Rychter, Josef, 96191 Trunstadt (DE)
(74) Vertreter: Beyer, Andreas, Dr.
(86) Internationale Anmeldenummer: EP9705046
(87) Internationale Veröffentlichungsnummer: WO9810961

(56) Entgegenhaltungen:
- DE-A- 3 315 535
- US-A- 4 991 869
- PATENT ABSTRACTS OF JAPAN vol. 016, no. 531 (M-1333), 30.Oktober 1992 & JP 04 197849 A (INOAC CORP;OTHERS: 01), 17.Juli 1992,
- PATENT ABSTRACTS OF JAPAN vol. 015, no. 350 (M-1154), 5.September 1991 & JP 03 136949 A (NIPPON PLAST CO LTD), 11.Juni 1991,
- PATENT ABSTRACTS OF JAPAN vol. 018, no. 637 (M-1716), 5.Dezember 1994 & JP 06 247252 A (TOYODA GOSEI CO LTD), 6.September 1994,
- PATENT ABSTRACTS OF JAPAN vol. 015, no. 350 (M-1154), 5.September 1991 & JP 03 136948 A (NIPPON PLAST CO LTD), 11.Juni 1991,

## Beschreibung

Die Erfindung betrifft eine Airbag-Abdeckung mit einem Kunststoff-Innenteil, das zumindest eine daran befestigte Klappe aufweist, die sich unter Krafteinwirkung längs einer vorgegebenen Reißlinie öffnet, und einem Kunststoff-Außenteil, das mit dem Kunststoff-Innenteil verbunden ist und aus einem Kunststoff besteht, der weicher als der Kunststoff des Innenteils ist.

Airbag-Systeme werden heutzutage in die meisten neuen Kraftfahrzeuge als ergänzende Rückhaltesysteme eingebaut, um bei einer starken Kollision eines Kraftfahrzeuges den Körper und insbesondere den Kopf des bzw. der Fahrzeuginsassen großflächig abzufangen und so nach Möglichkeit schwerere Verletzungen zu verhindern. Die Hauptkomponenten eines solchen Airbag-Systems sind der sich im Kollisionsfall aufblähende, meist sackförmige Airbag selbst, ein üblicherweise pyrotechnischer Gasgenerator, der im Kollisionsfall gezündet wird und das zur Aufblähung des Airbags notwendige Gas liefert, eine mit dem Gasgenerator verbundene Auslösesensorik und schließlich eine Airbag-Abdeckung, die den vor einer Auslösung des Airbag-Systems zusammengefaltet untergebrachten Airbag überdeckt und vor Beschädigungen schützt.

Ist das Airbag-System ein Fahrer-Airbag, dann ist die Airbag-Abdeckung üblicherweise als Lenkradnabenabdeckung ausgebildet. Die Airbag-Abdeckung kann aber auch ein Teil der Armaturentafel eines Kraftfahrzeugs sein, beispielsweise dann, wenn es sich bei dem Airbag-System um einen Beifahrer-Airbag handelt. Schließlich kann die Airbag-Abdeckung auch ein Teil einer Türinnenverkleidung sein, wenn es sich bei dem Airbag-System um einen Seitenairbag handelt.

Damit eine Airbag-Abdeckung im Kollisionsfall die Entfaltung und Aufblähung des Airbags gestattet, weist die Abdeckung mindestens eine, zumindest jedoch zwei oder mehrere Klappen auf. Wenn in einem Kollisionsfall der Gasgenerator gezündet worden ist und Gas unter Druck in den noch zusammengefalteten Airbag bläst, dann führt der auf diese Weise von innen gegen die Abdeckung wirkende Druck dazu, daß sich die vorgenannten Klappen längs einer vorbestimmten Reißlinie öffnen, woraufhin der Airbag sich entfalten und seinen aufgeblasenen Zustand einnehmen kann.

Im Fall einer Kollision laufen die zuvor geschilderten Vorgänge sehr schnell, d.h. innerhalb weniger Millisekunden ab. Es ist wichtig, daß ein Airbag sich bei einer Kollision zu einem ganz bestimmten, genau berechneten Zeitpunkt öffnet, denn nur dann kann seine Schutzfunktion optimal sein. Dieser bestimmte Zeitpunkt ist fahrzeugspezifisch, denn er hängt ganz wesentlich von der Fahrzeugverzögerung, d.h. dem Verformungsverhalten der Knautschzone eines gegebenen Fahrzeugs, und dem Verhalten weiterer Rückhaltesysteme während einer Kollision ab, insbesondere von dem Ansprechverhalten und der Dehnung eines Sicherheitsgurtsystems. Es leuchtet deshalb ohne weiteres ein, daß das Öffnungsverhalten der Klappen der Airbag-Abdeckungen möglichst präzise definiert sein muß, um die Einhaltung eines vorausberechneten Öffnungszeitpunktes in der Praxis zu gewährleisten.

Zu Beginn der Verwendung von Airbag-Systemen in Kraftfahrzeugen waren die Airbag-Abdeckungen aus PUR-Integralschaum gefertigt. Aufgrund der relativ geringen spezifischen Festigkeit von PUR-Schaum mußten solche PUR-Integralschaumabdeckungen relativ dickwandig sein, was zu einem hohen Eigengewicht führte. Da PUR-Schaum schnell ein- und weiterreißt, wurden zur Erhöhung der Festigkeit häufig Textilarmierungen in die Integralschaumabdeckung eingeschäumt die verhindern sollten, daß Teile einer solchen Airbag-Abdeckung sich beim nahezu explosionsartigen Öffnen der Klappen lösen und davonfliegen, was Verletzungen der Fahrzeuginsassen nach sich ziehen kann. Entlang der vorbestimmten Reißlinie wurden diese Textilarmierungen jedoch aufgeschnitten, da sie ansonsten das ordnungsgemäße Öffnen der Klappen der Airbag-Abdeckung verhindert hätten. Der Öffnungswiderstand entlang der Reißlinie wurde demnach nur von der Art des verwendeten PUR-Schaums sowie dessen Dicke im Bereich der Reißlinie bestimmt. Verwiesen sei in diesem Zusammenhang beispielsweise auf die DE 40 24 189 A1.

Um Airbag-Abdeckungen leichter und preiswerter herstellen zu können, wird heutzutage vermehrt eine Zweikomponentenspritzgußtechnik eingesetzt. Hierbei wird zunächst ein härteres und festeres Kunststoff-Innenteil gespritzt, wobei die gewünschte Reißlinie im allgemeinen zunächst materialfrei gelassen wird. Da ein solches Kunststoff-Innenteil normalerweise weder bezüglich des Griffs noch bezüglich des Aussehens die Anforderungen der Fahrzeughersteller erfüllt, wird in einem zweiten Spritzgußschritt eine möglichst weiche Schicht aus elastomermodifiziertem Thermoplastpolymer als Kunststoff-Außenteil bzw. -schicht auf das Innenteil aufgespritzt. Die gewünschte Reißlinie wird in der Außenschicht durch eine Dickenreduzierung ihres Kunststoffmaterials, üblicherweise durch eine Nut oder eine Perforation, vorgegeben. Das bedeutet, daß die Öffnungskraft der Airbag-Abdeckung im wesentlichen durch die Materialdicke der weichen Außenschicht im Bereich der Reißlinie bestimmt wird, was eine ausreichende Festigkeit dieser Außenschicht voraussetzt. Im Widerspruch dazu soll das Außenteil einen möglichst angenehmen, weichen Griff gewährleisten, was eine geringere Festigkeit nach sich zieht, und darüber hinaus bezüglich des Aussehens je nach Einsatzort beispielsweise der angrenzenden Armaturentafel oder dem Lenkrad entsprechen.

Zahlreiche Druckschriften, etwa die DE 39 42 694 A1, die DE 40 05 188 A1, die DE 40 40 396 A1 und die DE 41 15 913 A1, beschreiben Varianten der zuvor genannten Vorgehensweise, zwei unterschiedliche Thermoplaste aufeinander zu spritzen.

Bei den bekannten Airbag-Abdeckungen, und zwar sowohl bei den PUR-Integralschaumabdeckungen als auch bei den in Zweikomponentenspritzgußtechnik hergestellten Abdeckungen, bestimmt allein der verwendete Kunststoff und vor allem seine Wandstärke im Bereich der gewünschten Reißlinie die notwendige Öffnungskraft und damit den Zeitpunkt des Öffnens. Es ist jedoch bekannt, daß sich die Eigenschaften von Kunststoffen, insbesondere von elastomermodifizierten Kunststoffen, mit der Zeit verändern. Dies gilt besonders für einen Einsatz in einem Kraftfahrzeug, wo der Kunststoff über viele Jahre einer wechselnden Temperaturbelastung von -30 °C bis über 100 °C ausgesetzt sein kann. Hinzu kommt die durch eine direkte Sonneneinstrahlung erfolgende Versprödung (UV-Versprödung) der Kunststoffe. Ersichtlich ändern sich deshalb die physikalisch-mechanischen Eigenschaften wie Zugfestigkeit, Biegesteifigkeit usw. einer aus Kunststoff bestehenden Airbag-Abdeckung im Laufe der Zeit, so daß die gewünschte Öffnungscharakteristik und insbesondere der gewünschte Öffnungszeitpunkt bei heutigen Airbag-Abdeckungen nach 10 oder 15 Jahren nicht mehr gewährleistet ist.

Darüber hinaus unterliegt der im Rahmen der vorliegenden Anmeldung besonders interessierende Bereich der Reißlinie bei in Spritzgußtechnik hergestellten Airbag-Abdeckungen in einer Serienproduktion schon ohne Berücksichtigung der genannten Langzeiteinflüsse erheblichen Schwankungen, denn das beim Spritzgußvorgang entstehende, örtliche Gefüge, seine Molekularstruktur und -orientierung streuen von Abdeckung zu Abdeckung in einem weiten Bereich, was zu einer deutlichen Verschiebung des Öffnungszeitpunktes führt. Die angesprochenen Toleranzen ergeben sich vor allem aus der begrenzten Genauigkeit des Spritzgußvorgangs, die zu einer sich längs der Reißlinie ändernden Materialdicke und damit zu lokal unterschiedlichen Öffnungskräften führt, aber auch aus dem unterschiedlichen Fließverlauf des Kunststoffs beim Spritzgießen. Mit anderen Worten: Die Genauigkeit des Spritzgußvorgangs erlaubt es nicht, die Reißlinie so zu fertigen, daß entlang ihrer Erstreckung und auch bezüglich einer Serie von Bauteilen eine vorbestimmte niedrige und gleichbleibende Aufreißkraft sichergestellt ist. Es ist bekannt, daß die so entstehenden Toleranzen dazu führen, daß die mittels eines Streifentests ermittelte Öffnungskraft der Reißlinie einer Airbag-Abdeckung zwischen 3 und 10 N/cm schwankt. Dies bedeutet, daß der Öffnungszeitpunkt der Airbag-Abdeckung nach erfolgter Zündung des Gasgenerators in einem Bereich von etwa 1,5 bis 6 ms schwanken kann. Hierbei sind wie gesagt Langzeiteinflüsse noch gar nicht berücksichtigt.

Der relativ stark schwankende Öffnungszeitpunkt herkömmlicher Airbag-Abdeckungen ist äußerst unerwünscht, denn er verhindert die optimale Schutzfunktion des Airbag-Systems. So läßt beispielsweise ein nur geringfügig später erfolgendes Öffnen der Airbag-Abdeckung die Temperatur zu Beginn gefährlich ansteigen, was zum einen den Füllvorgang des Airbags thermodynamisch verändert und somit einem exakt definierten Öffnungs- und Aufblasvorgang entgegenwirkt, und zum anderen dazu führen kann, daß das Material des Airbags durch die zu lange auf den noch zusammengefalteten Airbag einwirkenden, heißen Gase unerwünscht verändert oder sogar zerstört wird. Insbesondere bei den geplanten neuen Generationen von Airbag-Systemen, bei denen der Airbag beispielsweise in Abhängigkeit der Kollisionsschwere und des Gewichts des jeweiligen Fahrzeuginsassen gesteuert aufgebläht werden soll, sind hinsichtlich der Airbag-Abdeckung besonders niedrige Öffnungskräfte erforderlich, die für alle Abdeckungen einer Serie und bezüglich jeder einzelnen Abdeckung langfristig präzise eingehalten werden müssen.

Ein weiteres Problem herkömmlicher Airbag-Abdeckungen besteht darin, daß die Spritzguß-Thermoplaste zur Erzielung der gewünschten Eigenschaften, insbesondere einer möglichst großen Weichheit bei gleichzeitig hoher Temperaturbeständigkeit, stark modifiziert werden müssen. Es werden heute spezielle Mischungen, Blends und Compounds eingesetzt, die nach Art und Sorte nicht mehr spezifizierbar sind. Beispielsweise wird ein Massenkunststoff wie Polypropylen mit synthetischen Kautschuken, Teercopolymeren (EPDM) elastomermodifiziert, wobei der Anteil solcher Elastomere bis über 60 % betragen kann. Solche Kunststoffe werden dann mit nicht normgerechten Materialbezeichnungen wie TEEE oder TPO bezeichnet. Vorhandene gesetzliche Regelungen zur Spezifikation, die ein späteres Recycling ermöglichen sollen, werden damit nicht erfüllt. Herkömmliche Zweikomponentenspritzguß-Abdeckungen lassen sich auch deshalb nur schlecht einem Recycling zuführen, weil zumeist zwei verschiedene Kunststoffwerkstoffe (Kunststoff-Innenteil und Außenschicht) untrennbar miteinander verbunden sind. Eine Airbag-Abdeckung gemäß dem Oberbegriff des Anspruchs 1 ist z.B. aus JP-A-04 197 849 bekannt.

Der Erfindung liegt deshalb die Aufgabe zugrunde, eine Airbag-Abdeckung bereitzustellen, deren Öffnungsverhalten möglichst genau einstellbar ist, wobei dieses Öffnungsverhalten über viele Jahre trotz der angesprochenen Umwelteinflüsse zumindest annähernd konstant bleiben soll. Insbesondere liegt der Erfindung die Aufgabe zugrunde, eine Airbag-Abdeckung zu schaffen, die es gestattet, eine möglichst niedrige Öffnungskraft so genau wie möglich einzustellen und langfristig beizubehalten.

Erfindungsgemäß ist diese Aufgabe ausgehend von der eingangs genannten Airbag-Abdeckung durch die Merkmale des Kennzeichens des Anspruchs 1 gelöst. Die am Kunststoff-Innenteil schwenkbar befestigte, zumindest eine Klappe ist entlang der vorgegebenen Reißlinie mit dem Kunststoff-Innenteil oder mit weiteren Klappen also nur durch die im Kunststoff-Innenteil eingebetteten Fäden verbunden, die im Bereich der Reißlinie jedoch nicht vom Kunststoff des Innenteils umgeben sind. Im Gegensatz zu allen bisher bekannten Lösungen bestimmen somit erfindungsgemäß die entlang der Reißlinie mit Abstand voneinander angeordneten und sich über die Reißlinie erstreckenden Fäden die erforderliche Öffnungskraft der Abdeckung.

Der besondere Vorteil einer erfindungsgemäßen Airbag-Abdeckung liegt darin, daß das Abreißen der die Reißlinie überspannenden Fäden bei der Flächenlast, die durch das von dem nach einer Auslösung des Airbag-Systems vom Gasgenerator erzeugten Druckgas auf die Airbag-Abdeckung ausgeübt wird, immer am Übergang der Fäden zum Kunststoff des Kunststoff-Innenteils geschieht. Die für einen solchen Abriß erforderliche Kraft kann durch die Art und Anzahl sowie den Durchmesser der verwendeten Fäden viel präziser und reproduzierbarer als bei bisherigen Lösungen eingestellt werden. Als weiterer Vorteil ergibt sich, daß bei einer erfindungsgemäßen Abdeckung das Material des Kunststoff-Außenteils keinen bestimmenden Einfluß auf das Öffnungsverhalten hat und deshalb ohne Kompromisse in Bezug auf Aussehen und weichen Griff optimiert werden kann. Damit können Airbag-Abdeckungen mit wesentlich hochwertigeren Oberflächen als bisher hergestellt werden.

Vorteilhaft sind die Fäden im Bereich der Reißlinie, in dem sie nicht vom Kunststoff des Innenteils umgeben sind, von dem Kunststoffmaterial des Außenteils bzw. der Außenschicht umgeben. Die solchermaßen im Bereich der Reißlinie vorhandene Einbettung der Fäden in den Kunststoff des Außenteils bzw. der Außenschicht vergleichmäßigt den Aufreißvorgang, indem das taktweise erfolgende Zerreißen einzelner Fäden durch das Zerreißen des Kunststoffs des Außenteils etwas gedämpft wird. Der Kunststoff des Außenteils bzw. der Außenschicht ist jedoch so weich und hat daher eine so niedrige Festigkeit, daß die Öffnungskraft der Airbag-Abdeckung entlang der vorbestimmten Reißlinie nahezu ausschließlich durch die Kraft bestimmt ist, die zum Zerreißen der die Reißlinie überspannenden Fäden aufgebracht werden muß. Die Öffnungskraft und damit der Öffnungszeitpunkt der erfindungsgemäßen Airbag-Abdeckung wird von der im Bereich der Reißlinie vorhandenen Einbettung der Fäden in den Kunststoff des Außenteils deshalb nicht spürbar beeinflußt.

Gemäß einer bevorzugten Ausführungsform der erfindungsgemäßen Airbag-Abdeckung ist das Kunststoff-Innenteil ein thermoplastisches Spritzgußteil, insbesondere ein solches aus einem thermoplastischen Polyurethan (TPU), das vorteilhaft eine Härte Shore D = 50 bis 70 aufweist. Die die Reißlinie überspannenden Fäden sind zweckmäßigerweise von einem solchen Spritzgußteil umspritzt, außer im Bereich der Reißlinie, wo die Fäden frei bleiben.

Vorteilhaft ist bei der erfindungsgemäßen Airbag-Abdeckung das Kunststoff-Außenteil auf das Kunststoff-Innenteil aufgeschäumt. Dies kann beispielsweise dadurch geschehen, daß das zuvor beschriebene Kunststoff-Innenteil als sogenannter Einleger in ein Schäumwerkzeug eingelegt wird, in dem dann die beispielsweise aus PUR-Schaum bestehende Außenschicht aufgeschäumt wird. Wird für das Außenteil PUR-Schaum verwendet, so hat dieser bevorzugt eine mittlere Dichte von 200 bis 400 g/l. Die Dicke der aufgeschäumten Außenschicht kann je nach Ausführung ca. 0,5 mm bis 10 mm betragen, im Bereich der Reißlinie, also dort, wo die Fäden in das Material des Außenteils bzw. der Außenschicht eingebettet sind, beträgt die Dicke der Außenschicht jedoch nur etwa 0,4 mm bis etwa 1 mm.

Das Kunststoff-Außenteil bzw. die Kunststoffaußenschicht besteht bei der erfindungsgemäßen Airbag-Abdeckung bevorzugt aus einem thermoplastischen Schaumspritzguß oder aus Reaktionsschaum.

Die die Reißlinie überspannenden Fäden sind bevorzugt feine Garne oder auch Monofilamente von jeweils ca. 10 bis ca. 25 dtex. Es können auch Garne aus entsprechend dünneren Monofilamenten verwendet werden.

Die die Reißlinie überspannenden Fäden sind bevorzugt keine Einzelfäden, sondern Teil eines textilen Gebildes, beispielsweise eines Gewebes, Geleges oder Gewirkes, das bis auf den Bereich der Reißlinie vom Kunststoff-Innenteil umspritzt ist. Durch eine geeignete Auswahl des textilen Gebildes läßt sich die Öffnungsmechanik der Airbag-Abdeckung gezielt steuern, beispielsweise durch Auswahl eines textilen Gebildes mit einer richtungsabhängig unterschiedlichen Reißkraft, oder auch vergleichmäßigen, etwa durch Auswahl eines textilen Gebildes mit möglichst richtungsunabhängiger Reißkraft.

Bei allen Ausführungsformen erfindungsgemäßer Airbag-Abdeckungen liegt bevorzugt der Schmelzpunkt des Materials der Fäden etwa 10 bis 25 °C über dem Schmelzpunkt des für das Innenteil verwendeten Kunststoffes. Auf diese Weise wird verhindert, daß die Fäden bzw. das aus ihnen gebildete textile Gebilde beim Umspritzen beschädigt wird.

Bei bevorzugten Ausführungsformen erfindungsgemäßer Airbag-Abdeckungen gehört zudem das Material des Kunststoff-Innenteils, der Fäden sowie des Kunststoff-Außenteils der gleichen Kunststoffgruppe an. Eine solche Airbag-Abdeckung aus artengleichen Kunststoffen ist gesetzeskonform spezifizierbar und läßt sich einem späteren Recycling ohne Probleme zuführen.

Erfindungsgemäße Airbag-Abdeckungen sind in Serienfertigung kostengünstig herstellbar. Sie können zm Beispiel in einem herkömmlichen Mehrkomponenten-Spritzgußwerkzeug hergestellt werden. Eine andere Möglichkeit der Herstellung besteht darin, zunächst das Innenteil vorzufertigen und dieses dann als Einleger in einem separaten Schäumwerkzeug mit der Außenlage zu versehen. Das textile Gebilde kann dabei selbsthaftend in das erste Werkzeug so eingelegt werden, daß es zwischen den Werkzeughälften längs der Reißlinie abgedichtet ist, so daß diese beim anschließenden Umspritzen freibleibt und ein Kunststoff-Innenteil mit freien Textilstegen entsteht. Das solchermaßen erzeugte Kunststoff-Innenteil kann dann im Rahmen des Aufbringens der Außenschicht in dem separaten Schäumwerkzeug derart fixiert sein, daß es nur vorderseitig angeschäumt wird. Eine Dichtung auf der Rückseite der Reißlinie ermöglicht dabei das Umschäumen der Textilstege mit dem Kunststoffmaterial der Außenschicht. Wird ein Zweikomponentenspritzgußwerkzeug verwendet, kann alternativ das Kunststoff-Innenteil nach dessen Erzeugung in dem Spritzgußwerkzeug verbleiben und es wird lediglich das vorderseitige Werkzeug gewechselt und danach mit thermoplastischem Schaumspritzguß (TSG) die Außenschicht aufgespritzt.

Versuchsweise hergestellte Muster erfindungsgemäßer Airbag-Abdeckungen waren zudem 30 bis 50 % leichter als herkömmliche Airbag-Abdeckungen. Anhand von durchgeführten Untersuchungen mit Streifenproben, die senkrecht zur Reißlinie mit Zugkraft beaufschlagt wurden, konnte nachgewiesen werden, daß die Zugfestigkeit entlang der Reißlinie deutlich geringeren Toleranzen unterliegt als bei herkömmlichen Airbag-Abdeckungen üblich.

Ein Ausführungsbeispiel einer erfindungsgemäßen Airbag-Abdeckung wird im folgenden anhand der beigefügten, schematischen Figuren näher erläutert. Es zeigt:
- Fig. 1: einen Teilschnitt durch eine erfindungsgemäße Airbag-Abdeckung, und
- Fig. 2: einen Schnitt im Bereich der Reißlinie in vergrößerter Darstellung.

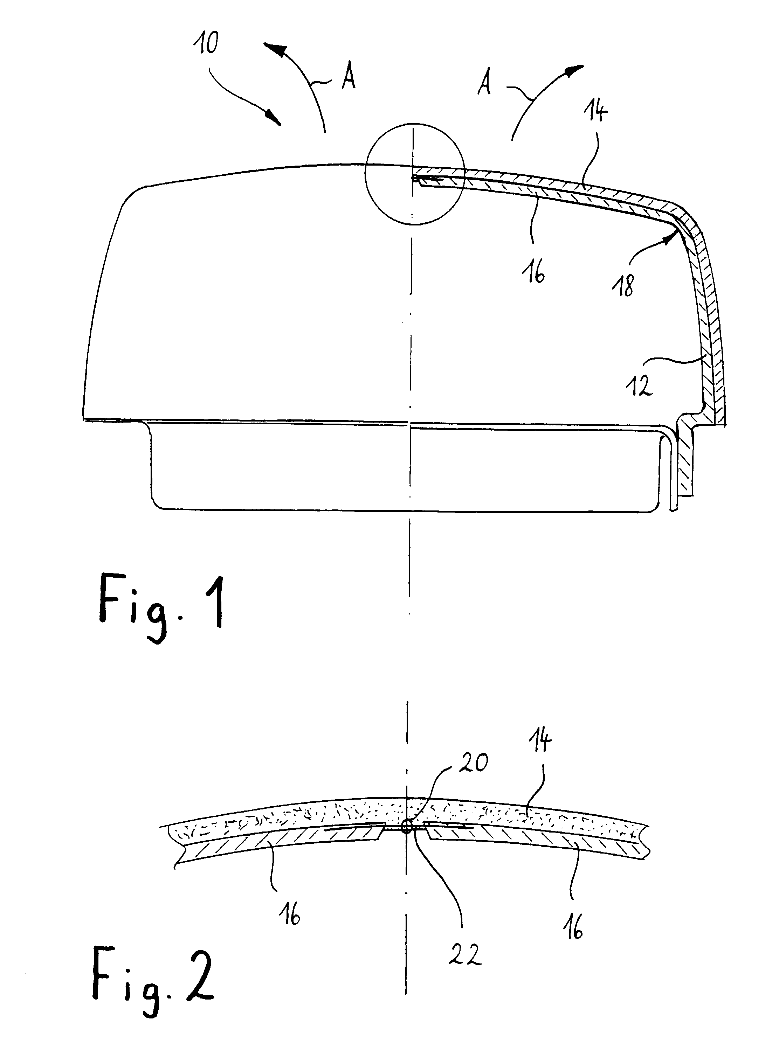

In Fig. 1 ist eine im wesentlichen topfförmige und allgemein mit 10 bezeichnete Airbag-Abdeckung für ein Fahrerairbag-System dargestellt. Unter der Abdeckung 10 befinden sich im Einbauzustand ein hier nicht dargestellter, zusammengefalteter Airbag und ein damit verbundener, ebenfalls nicht dargestellter Gasgenerator, die beide in der Nabe eines nicht gezeigten Lenkrades untergebracht sind.

Die hier als Lenkradnabenabdeckung ausgebildete Airbag-Abdeckung 10 weist ein Kunststoff-Innenteil 12 auf, mit dem ein Kunststoff-Außenteil 14 (auch als Außenschicht zu bezeichnen) fest verbunden ist.

Das Kunststoff-Innenteil 12 sorgt für die strukturelle Festigkeit der Abdeckung 10 und besteht daher aus einem relativ harten, festen aber dennoch flexiblen Kunststoff, beispielsweise aus einem thermoplastischen Polyurethan mit einer Shore D Härte von 50 bis 70.

Das Kunststoff-Außenteil 14 hat lediglich die Aufgabe, einen gewünschten, angenehm weichen Griff zu gewährleisten und im übrigen hinsichtlich Farbe und Oberflächenbeschaffenheit weitestmöglich mit angrenzenden Fahrzeugteilen übereinzustimmen, beispielsweise mit einer Armaturentafel oder - wie im gezeigten Ausführungsbeispiel - mit dem Lenkrad. Das Kunststoff-Außenteil 14 ist auf das Kunststoff-Innenteil 12 aufgeschäumt und besteht beispielsweise aus PUR-Schaum mit einer mittleren Dichte von 200 bis 400 g/l.

Damit der von der Abdeckung 10 geschützte Airbag sich im Kollisionsfall entfalten und aufblähen kann, muß sich die Abdeckung 10 öffnen können. Hierzu ist das Kunststoff-Innenteil 12 mit zwei im wesentlichen rechteckigen Klappen 16 versehen, die einstückig mit dem Kunststoff-Innenteil 12 ausgebildet und an ihrer einen Seite mittels je eines Quasigelenks 18, von denen in Fig. 1 nur eines dargestellt ist, an dem Kunststoff-Innenteil 12 schwenkbar befestigt sind. Entlang einer vorgegebenen Reißlinie 20, die sich längs derjenigen Seiten jeder Klappe 16 erstreckt, die nicht mittels des Quasigelenks 18 mit dem Kunststoff-Innenteil 12 verbunden sind, kann die Abdeckung 10 aufreißen. Wenn der nicht dargestellte Gasgenerator gezündet worden ist und Gas unter Druck in den Airbag bläst, führt der solchermaßen auf die Innenseite der Abdeckung 10 ausgeübte Druck zum Aufreißen der Abdeckung 10 längs der Reißlinie 20, wobei die beiden Klappen 16 sich in Richtung der Pfeile A öffnen.

Die zum Öffnen der beiden Klappen 16, also zum Aufreißen der Abdeckung 10 entlang der vorgegebenen Reißlinie 20 erforderliche Kraft wird durch eine Vielzahl von die Reißlinie 20 überspannenden Fäden 22 bestimmt, die längs der Reißlinie 20 mit Abstand voneinander angeordnet und in dem Kunststoff-Innenteil 12 eingebettet sind, beispielsweise durch Umspritzen während eines zur Herstellung des Kunststoff-Innenteils 12 durchgeführten Spritzgußschrittes. Im Bereich der Reißlinie 20 sind die Fäden 22 jedoch nicht von dem Kunststoff des Innenteils 12 umspritzt, sondern werden nur von dem Kunststoff des Außenteils 14 umgeben.

Die Figuren erläutern nur das Grundprinzip der vorliegenden Erfindung, das darin besteht, die zum Aufreißen der Abdeckung 10 erforderliche Kraft nahezu ausschließlich durch eine Vielzahl von die Reißlinie 20 überspannenden Fäden 22 zu bestimmen. In Abweichung von den Figuren können die Fäden 22 insbesondere Teil eines textilen Flächengebildes sein, das abgesehen von dem Bereich der Reißlinie 20 von dem Kunststoff des Innenteils 12 umspritzt ist. Die Fäden 22 verbinden also als Stege die ansonsten voneinander getrennten Klappen 16.

Im folgenden wird die Herstellung zweier Versuchsmuster näher erläutert.

### Beispiel 1

Ein thermoplastisches Polyurethan (TPU) mit einer Shore D Härte von 50 bis 70 wird als Innenteil 12 derart gespritzt, daß ein Textil-Netz oder Gelege aus feinen Polyurethanfäden mit Ausnahme des Bereiches der vorgegebenen Reißlinie 20 von dem TPU umspritzt wird. Das Textil-Netz besteht aus feinen Garnen oder Monofil-Fasern von ca. 10 bis 20 dtex, deren Schmelzpunkt ca. 15 bis 25 °C über dem Schmelzpunkt des für das Innenteil 12 verwendeten Spritzgußwerkstoffes liegt.

Das so hergestellte Innenteil 12 ist für den Einsatz bei Temperaturen von -40 °C bis +90 °C besser geeignet als die herkömmlich verwendeten, modifizierten Polyester oder Polypropylene, da TPU eine höhere Kaltschlagzähigkeit und Warmstandsfestigkeit aufweist.

Dieses Innenteil 12 wird dann als Einleger in ein Schäumwerkzeug eingelegt, in dem eine Außenschicht 14 aus PUR-Schaum aufgeschäumt wird. Die aufgeschäumte Außenschicht 14 hat je nach Design der Abdeckung 10 eine Dicke von 0,5 mm bis über 10 mm, jedoch beträgt die Materialdicke der Außenschicht 14 im Bereich der Reißlinie 20 nur etwa 0,5 mm bis etwa 1 mm, vorzugsweise ca. 0,8 mm. Im Bereich der Reißlinie 20 ist das Textil-Netz nur vom PUR-Schaum der Außenschicht 14 umgeben. Die PUR-Schaumschicht hat eine mittlere Dichte von 200 bis 400 g/l.

Die Oberflächengüte der Abdeckung 10 wird durch die Vorderseite des Schäumwerkzeuges bestimmt und ist in Weichheit, Narbung und Farbvielfalt den elastomermodifizierten Thermoplasten, die zur Erzielung des gewünschten Finish meist nachlackiert werden müssen, überlegen. Die Werkzeugkosten für ein genarbtes Schäumwerkzeug sind im Vergleich zu einem genarbten Stahl-Spritzgußwerkzeug wesentlich niedriger, woraus auch eine größere Flexibilität für Änderungen innerhalb einer laufenden Serie von Abdeckungen 10 resultiert.

### Beispiel 2

In einem Zweikomponenten-Spritzgußwerkzeug wird ein Innenteil 12 aus einem thermoplastischen Polyester (PETP) und einem Polyester-Textil gespritzt, wobei die Polyesterfasern wiederum einen höheren Schmelzpunkt als der für das Innenteil 12 eingesetzte Spritzgußwerkstoff haben müssen.

In einem zweiten Schritt wird im selben Werkzeug eine Außenschicht 14 aus einem thermoplastischen Schaumspritzguß (TSG) möglichst niedriger Dichte aufgespritzt.

Alternativ ist es auch möglich, ein thermoplastisches Polybutadien, insbesondere Polybutadienterephthalat (PBTP), mit einem geeigneten, artengleichen Textil einzusetzen und anschließend ein expandierbares PBTP aufzuspritzen.

## Patentansprüche

1. Airbag-Abdeckung (10), mit
- einem Kunststoff-Innenteil (12), das zumindest eine daran befestigte Klappe (16) aufweist, die sich unter Krafteinwirkung längs einer vorgegebenen Reißlinie (20) öffnet,
- einem Kunststoff-Außenteil (14), das mit dem KunststoffInnenteil (12) verbunden ist und aus einem Kunststoff besteht, der weicher als der Kunststoff des Innenteils (12) ist, und
- einem Verbindungselement, das in dem Kunststoff-Innenteil (12) eingebettet ist, das die Reißlinie (20) überspannt, und das im Bereich der Reißlinie (20) nicht von dem Kunststoff des Innenteils (12) umgeben ist,
dadurch gekennzeichnet, daß
das Verbindungselement durch eine Vielzahl von Fäden (22) gebildet ist, die die zur Öffnung der zumindest einen Klappe (16) entlang der vorgegebenen Reißlinie (20) notwendige Kraft bestimmen und die im Bereich der Reißlinie (20) allenfalls von dem gegenüber dem Kunststoff des Innenteils (12) deutlich weicheren Kunststoff des sichtbaren Außenteils (14) umgeben sind.

2. Airbag-Abdeckung nach Anspruch 1,
dadurch gekennzeichnet, daß das Kunststoff-Innenteil (12) ein thermoplastisches Spritzgußteil ist.

3. Airbag-Abdeckung nach Anspruch 1 oder 2,
dadurch gekennzeichnet, daß das Kunststoff-Außenteil (12) auf das Kunststoff-Innenteil (14) aufgeschäumt ist.

4. Airbag-Abdeckung nach Anspruch 3,
dadurch gekennzeichnet, daß die Schichtdicke des Kunststoff-Außenteils (14) im Bereich der Reißlinie einen Wert im Bereich von etwa 0,4 mm bis etwa 1 mm hat.

5. Airbag-Abdeckung nach einem der Ansprüche 1 bis 4,
dadurch gekennzeichnet, daß das Kunststoff-Außenteil (14) aus thermoplastischem Schaumspritzguß oder aus Reaktionsschaum besteht.

6. Airbag-Abdeckung nach einem der vorhergehenden Ansprüche,
dadurch gekennzeichnet, daß die Fäden (22) dünne Garne von ca. 10 bis 25 dtex sind.

7. Airbag-Abdeckung nach einem der Ansprüche 1 bis 5,
dadurch gekennzeichnet, daß die Fäden (22) aus Monofilamenten oder Multifilamenten bestehen.

8. Airbag-Abdeckung nach einem der vorhergehenden Ansprüche,
dadurch gekennzeichnet, daß die Fäden (22) Teil eines textilen Gebildes sind, beispielsweise eines Gewebes, Geleges oder Gewirkes.

9. Airbag-Abdeckung nach einem der vorhergehenden Ansprüche,
dadurch gekennzeichnet, daß der Schmelzpunkt des Materials der Fäden (22) etwa 10 bis 25 °C über dem Schmelzpunkt des Kunststoffes des Innenteils (12) liegt.

10. Airbag-Abdeckung nach einem der vorhergehenden Ansprüche,
dadurch gekennzeichnet, daß das Material des Kunststoff-Innenteils (12), der Fäden (22), und des Kunststoff-Außenteils (14) der gleichen Kunststoffgruppe angehört.

## Claims

1. An airbag cover (10) comprising
- a plastic inner part (12) having at least one flap (16) attached thereto which, under the influence of a force, opens along a predetermined rupture line (20),
- a plastic outer part (14) connected to the plastic inner part (12) and consisting of a plastic material which is softer than the plastic material of the inner part (12), and
- a joining element which is embedded in the plastic inner part (12), straddles the rupture line (20) and which, in the area of the rupture line (20), is not surrounded by the plastic material of the inner part (12),
characterised in that
the joining element is formed by a plurality of filaments (22) which define the force necessary for the opening of the at least one flap (16) along the predetermined rupture line (20) and which, in the area of the rupture line (20), are at most surrounded by the plastic material of the visible outer part (14), which is considerably softer than the plastic material of the inner part (12).

2. The airbag cover according to Claim 1,
characterised in that the plastic inner part (12) is a thermoplastic injection moulding part.

3. The airbag cover according to Claim 1 or 2,
characterised in that the plastic outer part (14) is foamed onto the plastic inner part (12).

4. The airbag cover according to Claim 3,
characterised in that the layer thickness of the plastic outer part (14) in the area of the rupture line (20) has a value in the range from approx. 0.4 mm to approx. 1 mm.

5. The airbag cover according to one of Claims 1 to 4,
characterised in that the plastic outer part (14) consists of a thermoplastic injection moulding foam part or of a reaction foam.

6. The airbag cover according to one of the preceding claims,
characterised in that the filaments (22) are thin yarns of approx. 10 to 25 dtex.

7. The airbag cover according to one of Claims 1 to 5,
characterised in that the filaments (22) consist of monofilaments or of multifilaments.

8. The airbag cover according to one of the preceding claims,
characterised in that the filaments (22) are part of a textile structure, for example, a woven fabric, a laid fabric, or a knitted fabric.

9. The airbag cover according to one of the preceding claims,
characterised in that the melting point of the material of the filaments (22) is approximately 10 to 25°C above the melting point of the plastic material of the inner part (12).

10. The airbag cover according to one of the preceding claims,
characterised in that the materials of the plastic inner part (12), the filaments (22), and the plastic outer part (14) belong to the same group of plastic materials.

## Revendications

1. Recouvrement de coussin gonflable (10), comprenant
- une partie intérieure (12) en matière synthétique qui présente, fixée sur elle, au moins un volet (16) qui s'ouvre à force suivant une ligne de rupture (20),
- une partie extérieure (14) en matière synthétique qui est reliée à la partie intérieure (12) en matière synthétique et se compose d'une matière synthétique qui est moins rigide que la matière synthétique de la partie intérieure (12), et
- un élément de liaison qui est noyé dans la partie intérieure (12) en matière synthétique, qui recouvre la ligne de rupture (20) et qui n'est pas entouré de la matière synthétique de la partie intérieure (12) dans la zone de la ligne de rupture (20),
caractérisé en ce que l'élément de liaison est formé d'une pluralité de fils (22) qui déterminent la force nécessaire pour l'ouverture dudit au moins un volet (16) suivant la ligne de rupture (20) prédéfinie et qui sont entourés dans la zone de la ligne de rupture tout au plus de la matière synthétique de la partie extérieure (14) visible sensiblement moins rigide que la matière synthétique de la partie intérieure (12).

2. Recouvrement de coussin gonflable selon la revendication 1,
caractérisé en ce que la partie intérieure (12) en matière synthétique est une pièce moulée par injection en une matière thermoplastique.

3. Recouvrement de coussin gonflable selon la revendication 1 ou 2,
caractérisé en ce que la partie extérieure (14) en matière synthétique est moussée sur la partie intérieure (12) en matière synthétique.

4. Recouvrement de coussin gonflable selon la revendication 3,
caractérisé en ce que l'épaisseur de la partie extérieure (14) en matière synthétique a, dans la zone de la ligne de rupture, une valeur comprise entre environ 0,4 mm et environ 1 mm.

5. Recouvrement de coussin gonflable selon l'une quelconque des revendications 1 à 4,
caractérisé en ce que la partie extérieure (14) en matière synthétique se compose de mousse thermoplastique moulée par injection ou de mousse de réaction.

6. Recouvrement de coussin gonflable selon l'une quelconque des revendications précédentes,
caractérisé en ce que les fils (22) sont des fils fins de filasse tordue d'environ 10 à 25 dtex.

7. Recouvrement de coussin gonflable selon l'une quelconque des revendications 1 à 5,
caractérisé en ce que les fils (22) se composent de monofilaments ou de multifilaments.

8. Recouvrement de coussin gonflable selon l'une quelconque des revendications précédentes,
caractérisé en ce que les fils (22) font partie d'un produit textile, par exemple d'un tissu, d'un non-tissé en nappes ou d'un tissu à mailles.

9. Recouvrement de coussin gonflable selon l'une quelconque des revendications précédentes,
caractérisé en ce que la température de fusion du matériau des fils (22) se situe environ 10 à 25 °C au dessus de la température de fusion de la matière synthétique de la partie intérieure (12).

10. Recouvrement de coussin gonflable selon l'une quelconque des revendications précédentes,
caractérisé en ce que la matière de la partie intérieure (12) en matière synthétique, des fils (22) et de la partie extérieure (14) en matière synthétique font partie du même groupe de matières synthétiques.
